# Europäisches Patentamt
## European Patent Office
## Office européen des brevets

(11) Veröffentlichungsnummer: **0 368 013 B1**

(12) **EUROPÄISCHE PATENTSCHRIFT**

(45) Veröffentlichungstag der Patentschrift: **28.04.93**

(21) Anmeldenummer: **89118869.0**

(22) Anmeldetag: **11.10.89**

Verbunden mit 89912235.2/0414830
(europäische
Anmeldenummer/Veröffentlichungsnummer)
durch Entscheidung vom 07.06.91.

(51) Int. Cl.⁵: **H04N 9/78**

(54) **Schaltung für ein adaptives Kammfilter zur Trennung von Leuchtdichtesignal und Farbartsignal eines FBAS-PAL- oder NTSC-Signals.**

(30) Priorität: **20.10.88 DE 3836043**

(43) Veröffentlichungstag der Anmeldung:
**16.05.90 Patentblatt 90/20**

(45) Bekanntmachung des Hinweises auf die
Patenterteilung:
**28.04.93 Patentblatt 93/17**

(84) Benannte Vertragsstaaten:
**AT BE CH DE ES FR GB GR IT LI LU NL SE**

(56) Entgegenhaltungen:
**DD-A- 113 287**
**DE-B- 2 911 927**
**GB-A- 2 169 772**

(73) Patentinhaber: **Deutsche Thomson-Brandt GmbH**
**Postfach 2060**
**W-7730 Villingen-Schwenningen(DE)**

(72) Erfinder: **Sowig, Helmut, Dipl.-Ing.**
**Sebastian Kneipp Strasse 14**
**W-7730 Villingen(DE)**
Erfinder: **Zahm, Michael, Dipl.-Ing.**
**Görlitzer Strasse 95**
**W-7730 Villingen(DE)**

**Beschreibung**

Bei Farbfernsehsystemen nach PAL oder NTSC wird das Farbartsignal in Form des quadratur modulierten Farbträgers F, das Leuchtdichtesignal Y, das Austastsignal A und das Synchronsignal S als kombiniertes sogenanntes FBAS-Signal übertragen. Dabei sind das Leuchtdichtesignal und das Farbartsignal frequenzmäßig verschachtelt. In der Praxis ist es häufig notwendig, das Leuchtdichtesignal einerseits und Farbartsignal andererseits zu trennen, um diese Signale getrennten Signalwegen für die Weiterverarbeitung oder die Bildwiedergabe zuzuführen. Die Trennung ist auch notwendig in einem Videorecorder, weil dort das Farbartsignal einer besonderen Umwandlung unterworfen wird.

Es ist bekannt, das vom Leuchtdichtesignal über einen Bandpaß abgetrennte Farbartsignal einer Zeilenverzögerung zu unterziehen, und durch Kombination der Signale vom Eingang und Ausgang der Zeilenverzögerung ein kammgefiltertes Farbartsignal zu gewinnen. Das reine Leuchtdichtesignal wird dadurch gewonnen, daß von dem kombinierten FBAS-Signal das extrahierte, kammgefilterte Farbartsignal subtrahiert wird. Bei einem derartigen Kammfilter kommt es zwangsläufig zu einer Mittlung über mehrere Zeilen, weil Signale aufeinanderfolgender Zeilen addiert werden. So werden z.B. bei einem PAL-Signal bei allen hochfrequenten Signalsprüngen bzw. Farbübergängen in vertikaler Richtung jeweils die ersten zwei Zeilen, sowie zwei Zeilen nach dem "HF-Signal" gestört, wie in der folgenden Auflistung dargestellt.

```
Zeile         direktes Signal        nach Kammfilter

  1        _____    _____

  2        ..................    ._._._._._._._.   (gestört)

  3        ..................    ._._._._._._._.   (gestört)

  4        ..................    ..................

  5        ..................    ..................

  6        _____    ._._._._._._._.   (gestört)

  7        _____    _____   (gestört)

  8        _____    _____
```

Für verbesserte Übertragungssysteme wie z.B. bei Recordern nach dem S-VHS-System oder bei hochauflösenden Fernsehsystemen, werden an ein Kammfilter aber erhöhte Anforderungen gestellt.

Der Erfindung liegt die Aufgabe zugrunde, ein Kammfilter der beschriebenen Art so weiterzubilden, daß bei guter Signaltrennung Störeffekte weitgehendst vermieden werden.

Diese Aufgabe wird gemäß der Erfindung durch die im Anspruch 1 aufgeführten Merkmale gelöst. Vorteilhafte Weiterbildungen der Erfindung sind in den Unteransprüchen gekennzeichnet.

Im Prinzip wird bei den die beschriebenen Fehler bewirkenden Merkmalen innerhalb einer Bildstruktur der Subtrahierstufe zur Erzeugung des reinen Leuchtdichtesignales anstelle des kammgefilterten Farbartsignales entweder nur das nicht verzögerte, bandpaßgefilterte Farbartsignal, oder auch in der PAL-Version kein Farbsignal zugeführt. Die Entscheidung, welches der Signale angeschaltet wird, wird durch eine Auswahlschaltung getroffen, deren Wirkungsweise anhand der Figuren beispielhaft näher beschrieben wird.

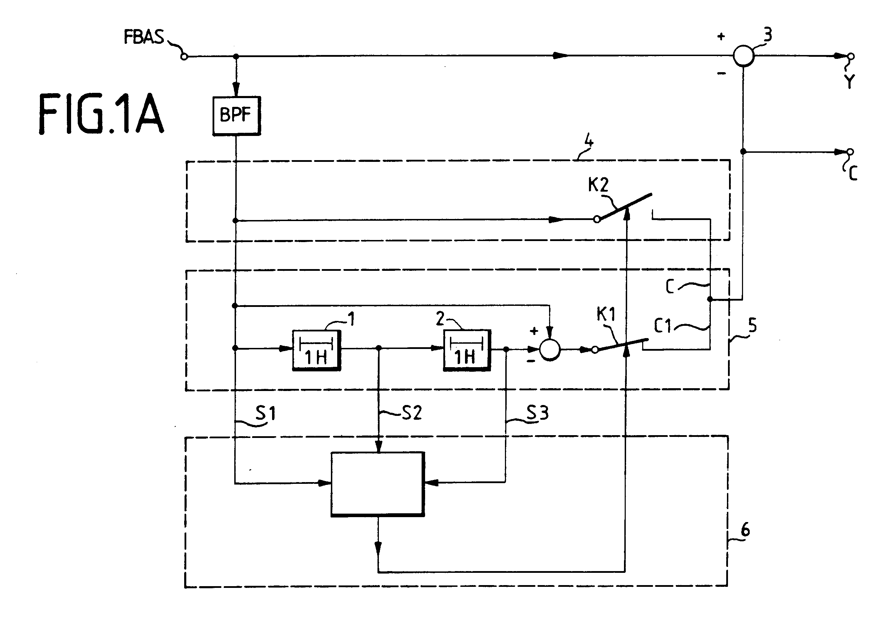

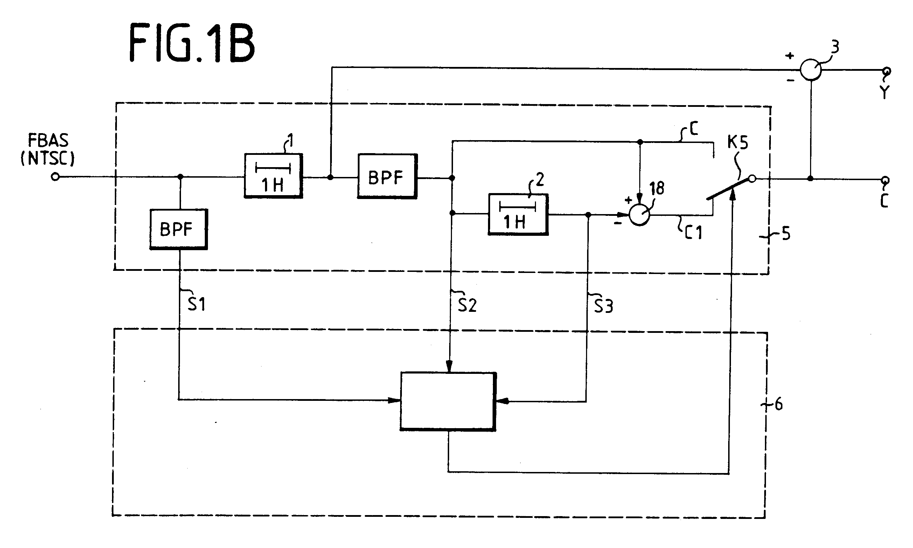

Fig. 1 zeigt anhand eines Blockschaltbildes das Prinzip einer adaptiven Kammfilterschaltung. Fig.1A für Signale nach PAL und Fig.1B für Signale nach NTSC. Hilfsschaltungen (Phasen-, Laufzeit-, Amplitudenkorrektur, usw.), die zwar für die Funktion der Schaltung notwendig sind, jedoch zum Verstehen des Prinzips nicht beitragen, werden in der Darstellung nicht berücksichtigt.

In Fig.1A wird das am Eingang anstehende PAL/FBAS-Signal einerseits einem Eingang einer Subtrahierstufe 3 und andererseits über ein Bandpaßfilter einer Auswahlschaltung bestehend aus den Blöcken 4,5 und 6 zugeführt, in welchen nach vorgegebenen Kriterien bestimmt wird, welches Farbsignal, C1 = zwei Zeilen kammgefiltert, oder C = nur bandpaßgefiltert, der Subtrahierstufe 3 zur Bildung des Leuchtdichtesignales Y zugeführt wird. In den Blöcken 4 und 5 sind steuerbare Schalter K1 und K2 vorhanden, durch die der jeweilige Farbsignalweg selektiert wird. Der Schaltzustand dieser Schalter wird von einer in Block 6 enthaltenen Signalausschalteschaltung gesteuert, wobei die Phasenzustände der an den 1H-Verzögerungsleitungen 1 und 2 anstehenden Signale S1,S2 und S3 für die Ausgabe der Schaltsignale ausgewertet werden.

In Fig.1B wird in Block 5 das am Eingang anstehende NTSC/FBAS-Signal über eine breitbandige 1-Zeilen-Verzögerungsleitung 1 einem Eingang der Subtrahierstufe 3 zugeführt. Die Kammfilterung für das Farbartsignal C1 geschieht mittels einer zweiten, schmalbandigen 1-Zeilen-Verzögerungsleitung 2 in Verbindung mit Subtrahierstufe 18, die mit einem vorgeschaltetem Bandpaßfilter der ersten Verzögerungsleitung 1 in Reihe nachgeschaltet ist. Die ansich für das NTSC-Kammfilter nicht nötige Verzögerungsleitung 1 ist erforderlich, um in Analogie zu Fig. 1A ein nicht verzögertes Signal S1 zu erhalten. Dieses kann das Farbträgersignal oder das bandpaßgefilterte Luminanzsignal sein. Dieses Signal wird in der in Block 6 enthaltenen Auswerteschaltung für den Vergleich mit dem um eine Zeile verzögerten Signal S2 und dem um 2 Zeilen verzögerten Signal S3 herangezogen. Von der Auswerteschaltung 6 wird eine Schaltspannung abgegeben, durch die in Block 5 mittels Schalter K5 jeweils dasjenige Farbartsignal C, C1, ausgewählt und der Subtrahierstufe 3 zugeführt wird, welches den optimalen Bedingungen zur Bildung des Leuchtdichtesignales Y entspricht.

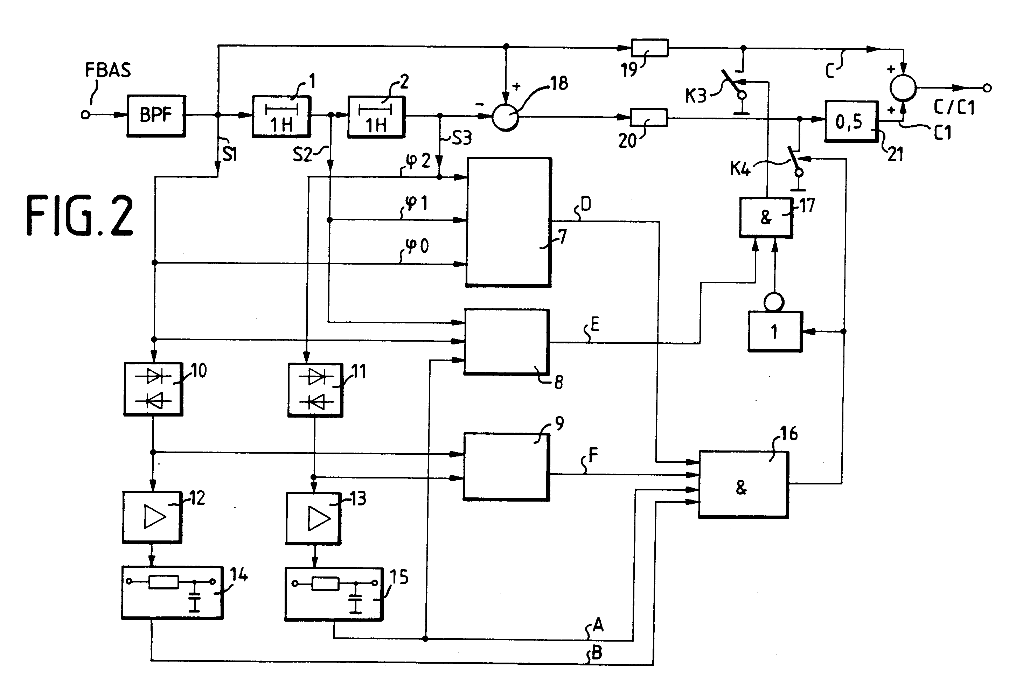

Fig. 2 zeigt für ein PAL-Signal anhand eines detaillierten Blockschaltbildes die Signalauswerteschaltung der nach Fig. 1A bezeichneten Blöcke 4,5 und 6. Es werden nach vorgegebenen Kriterien Schaltsignale A,B,D und F generiert, die dem Eingang der "UND"-Schaltung 16 zugeführt werden. Die weitere "UND"-Schaltung 17 wird von dem invertierten Ausgangssignal von Schaltung 16 sowie von dem in der Auswerteschaltung 8 generierten Schaltsignal E angesteuert. Die Umschaltung der Signalwege wird durch Schalter K3 und K4 bewirkt, die von den Ausgangssignalen der "UND"-Schaltungen gesteuert werden. Dabei gilt, daß bei einem H-Signal die Schalter geöffnet sind.

Wie in der Beschreibung bereits erwähnt, können Störungen herkömmlicher Kammfilter dadurch vermieden werden, daß die adaptive Steuerung mit Hilfe einer speziellen Auswerteschaltung, die alle vertikalen Signalsprünge erkennt, bei jedem dieser Sprünge vom kammgefilterten Signal C1 auf das bandpaßgefilterte Signal C umschaltet oder ggf. das Farbartsignal komplett abschaltet. Das kammgefilterte Farbartsignal wird vom Ausgang der Subtrahierstufe 18 abgenommen deren Eingänge das bandpaßgefilterte und das um zwei Zeilen verzögerte Farbartsignal zugeführt wird. Die Widerstände 19 und 20 dienen zur Entkopplung und die Verstärkungsstufe 21 der Amplitudenanpassung.

Es gibt folgende Schaltkriterien:

A) Das Kammfilter soll nur eingeschaltet werden, d.h. Ausgabe von Signal C1 (Schaltsignal A = H), wenn nach der 2H-Verzögerung (Signal S3) ein Farbartsignal oder ein hochfrequentes Y-Signal erscheint. Das den Einschaltvorgang auslösende Schaltsignal A kann z.B. wie folgt aus dem Signal S3 gewonnen werden:

    1. Zweiweggleichrichtung in Block 11
    2. Verstärkung/Begrenzung in Block 13
    3. Siebung mit sehr kurzer Zeitkonstante in Block 15.

B) Das Kammfilter muß ausgeschaltet werden (Schaltsignal B = L), wenn vor der 2H-Verzögerung (Signal S1) kein Farbartsignal oder kein hochfrequentes Y-Signal vorhanden ist. Die Schaltspannung B kann ebenfalls wie unter A) gewonnen werden:

    1. Zweiweggleichrichtung in Block 10
    2. Verstärkung/Begrenzung in Block 12
    3. Siebung mit sehr kurzer Zeitkonstante in Block 14.

C) Bei Farbwechseln in vertikaler Richtung muß ebenfalls auf das bandpaßgefilterte Signal C (Schaltsignal F = L) umgeschaltet werden. Würden hierzu direkt das OH- und das 2H-verzögerte Signal in der Phase verglichen, so müßte aufgrund des 1/4-Zeilen-Offsets ein Signal invertiert werden. Dadurch wäre jedoch das Kammfilter bei hochfrequenten Y-Signalen ständig ausgeschaltet. Aus diesem Grund wird die Phase der in den Blöcken 10 und 11 zweiweggerichteten Signale S1 und S3 in Erkennungsschaltung 9 verglichen, von der das Schaltsignal F abgegeben wird.

D) Für einen 180°-Farbsprung, bei dem auch auf das bandpaßgefilterte Signal C geschaltet werden muß (Schaltsignal D = L) ist eine besondere Erkennungsschaltung 7 notwendig, von der die Schaltspannung D abgegeben wird. Hierzu ist eine Aufteilung der 2H-Verzögerungsleitung in zwei 1H-Leitungen 1,2 erforderlich, um die Phasenlage des um eine Zeile verzögerten Signales S2 erkennen zu können. Wird nun über einer der beiden Leitungen eine Phasendifferenz und gleichzeitig über beide Leitungen Phasengleichheit festgestellt, kann daraus auf einen 180°-Sprung geschlossen werden. (Die gleiche Situation ergibt sich auch noch bei anderen, jedoch nicht praxisrelevanten Signalen.)

E) Erfolgt ein Signalsprung auf ein hochfrequentes Y-Signal, sollte der Farbartsignalausgang völlig abgeschaltet werden. (Schaltsignal E = L). Daß es sich um ein Luminanzsignal handelt, kann frühestens nach einer Zeile durch die Erkennungsschaltung 8 festgestellt werden. D.h., eine Zeile ist zwangsläufig gestört. Anschließend wird bei gleichen Signalen vor und hinter der ersten Verzögerungsleitung (S1 und S2) der Farbartsignalausgang abgeschaltet, wenn gleichzeitig durch die Erkennung nach A) kein Signal detektiert wird.

Für die Erkennungsschaltungen 7,8 und 9 gelten folgende Kriterien:

Erkennungsschaltung 7:    wenn $\phi_0 \neq \phi_1$

für 180° Farbsprung    (oder $\phi_1 \neq \phi_2$)

und $\phi_0 = \phi_2$

dann  D = L

sonst D = H

Erkennungsschaltung 8:    wenn $\phi_0 = \phi_1$

für Signalsprung auf    und

ein hochfrequentes    A = L

Y- Signal    dann  E = L

sonst E = H

Erkennungsschaltung 9:    wenn $\phi_2 = \phi_0$

für Farbwechsel in    dann  F = H

vertikaler Richtung    sonst F = L

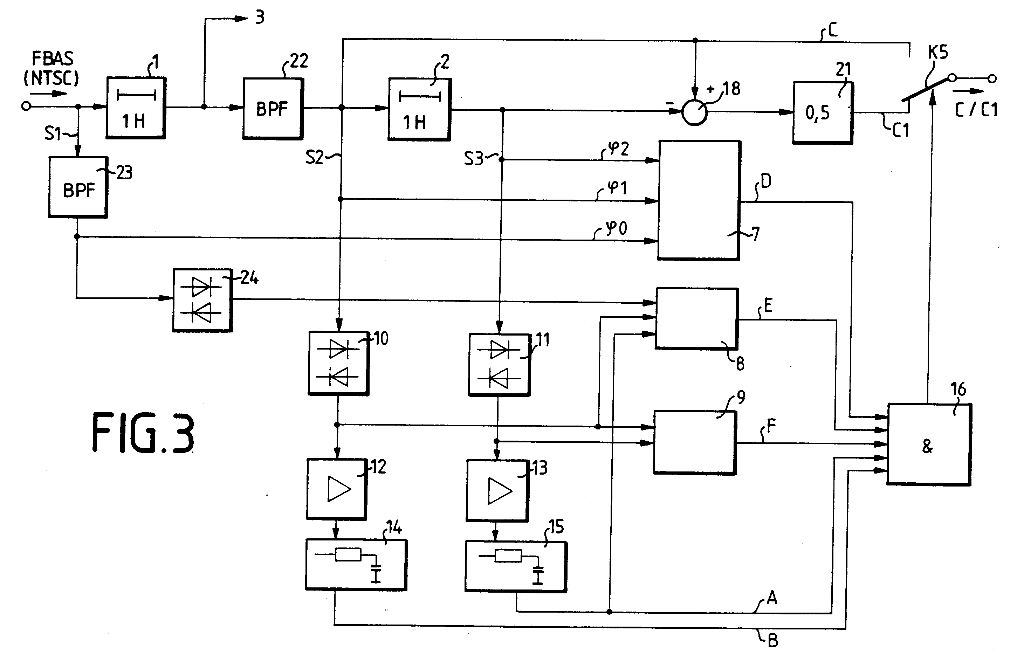

Fig. 3 zeigt für ein NTSC-Signal die Signalausweteschaltung der nach Fig. 1B bezeichneten Blöcke 5 und 6. Es werden nach vorgegebenen Kriterien Schaltsignale A,B,C,D und F generiert, die dem Eingang der "UND"-Schaltung 16 zugeführt werden. Die Umschaltung der Signalwege wird durch Schalter K5 bewirkt, der vom Ausgangssignal der "UND"-Schaltung 16 gesteuert wird. Dabei gilt, daß bei einem H-Signal Schalter K5 an das Signal C1 und bei einem L-Signal an das Signal C angelegt ist.

Wie in der Beschreibung bereits erwähnt, können Störungen herkömmlicher Kammfilter dadurch vermieden werden, daß die adaptive Steuerung mit Hilfe einer speziellen Auswerteschaltung, die alle vertikalen Signalsprünge erkennt, bei jedem dieser Sprünge vom kammgefilterten Signal C1 auf das bandpaßgefilterte Signal C umschaltet. Das kammgefilterte Farbartsignal C1 wird vom Ausgang der Subtrahierstufe 18 abgenommen, deren Eingänge das nicht verzögerte und das um eine Zeile verzögerte Farbartsignal der Stufe 2 zugeführt wird. Die Verstärkungsstufe 21 dient der Amplitudenanpassung.

Es gibt folgende Schaltkriterien:

A,B) Schalter K5 schaltet das kammgefilterte Farbartsignal C1 an (Schaltsignal A = H und/oder B = H) wenn ein hochfrequentes Farbart- oder Y-Signal vorhanden ist. Das Schaltsignal A kann wie folgt aus dem Signal S3 gewonnen werden:

1. Zweiweggleichrichtung in Block 11
2. Verstärkung/Begrenzung in Block 13
3. Siebung mit sehr kurzer Zeitkonstante in Block 15.

Die Schaltspannung B kann ähnlich wie die Schaltspannung A aus dem Signal S2 gewonnen werden

1. Zweiweggleichrichtung in Block 10
2. Verstärkung/Begrenzung in Block 12
3. Siebung mit sehr kurzer Zeitkonstante in Block 14.

C) Bei Farbwechseln in vertikaler Richtung (Farbphasensprung) muß das bandpaßgefilterte Signal C (Schaltsignal F = L) angeschaltet werden. Würden hierzu direkt die Signale S2 und S3 in der Phase verglichen, so müßte aufgrund des Zeilen-Offsets ein Signal invertiert werden. Dadurch wäre jedoch das Kammfilter bei hochfrequenten Y-Signalen ständig ausgeschaltet. Aus diesem Grund wird die Phase der in den Blöcken 10 und 11 zweiweggerichteten Signale S1 und S3 in Erkennungsschaltung 9 verglichen,

4

von der das Schaltsignal F abgegeben wird.

D) Für einen 180°-Farbphasensprung, bei dem auch auf das bandpaßgefilterte Signal C geschaltet werden muß (Schaltsignal D = L), ist eine besondere Erkennungsschaltung 7 notwendig, von der die Schaltspannung D abgegeben wird. Hierzu ist die Reihenschaltung von zwei 1H-Leitungen, 1,2 erforderlich, um die Phasenlage des um eine Zeile verzögerten Signales S2 sowie des um 2 Zeilen verzögerten Signales S3 erkennen zu können. Wird über Verzögerungleitung 1 und gleichzeitig über beide Leitungen 1,2 eine Phasendifferenz festgestellt, kann daraus auf einen 180°-Sprung geschlossen werden. Dies ergibt sich auch, wenn über Leitung 2 Phasengleichheit festgestellt wird.

E) Erfolgt ein Signalsprung von einem tieffrequenten auf ein hochfrequentes Y-Signal, muß ebenfalls das bandpaßgefilterte Signal C angeschaltet werden (Schaltsignal E = L). Bei gleichen Signalen vor und hinter der ersten Verzögerungsleitung 1 und wenn gleichzeitig die Erkennung nach A) kein Signal detektiert wird, ist Schaltsignal E = L.

Für die Erkennungsschaltungen 7,8 und 9 gelten folgende Kriterien:

Erkennungsschaltung 7:    wenn $\varphi_0 \neq \varphi_1$
für 180° Farbsprung    und

$(\varphi_0 \neq \varphi_2$

und/oder

$\varphi_1 = \varphi_2)$

dann D = L

sonst D = H

Erkennungsschaltung 8:    wenn $\varphi_0 = \varphi_1$
für Signalsprung auf    und
ein hochfrequentes    A = L
Y- Signal    dann E = L

sonst E = H

Erkennungsschaltung 9:    wenn $\varphi_1 \neq \varphi_2$
für Farbwechsel in    dann F = L
vertikaler Richtung    sonst F = H

Die in Figur 2 und 3 dargestellten Schaltungen sind Beispiele mehrerer denkbarer Schaltungsvarianten. Sie können sowohl in analoger als auch in digitaler Form realisiert werden. Auch ist es möglich, die Schaltungen in einem integrierten Schaltkreis zusammenzufassen.

**Patentansprüche**

1. Schaltung für ein adaptives Kammfilter zur Trennung von Leuchtdichtesignal (Y) und Farbartsignal (C) eines FBAS-PAL- oder NTSC-Signals mit einer Reihenschaltung einer ersten und zweiten Zeilenverzögerungsleitung (1, 2) und einer das Leuchtdichtesignal (Y) liefernden Subtrahierstufe (3), an deren Eingänge das FBAS-Signal und das extrahierte Farbartsignal angelegt sind, **dadurch gekennzeichnet,** daß aus einem Phasenvergleich der an den Verzögerungsleitungen (1, 2) anstehenden Signale (S1, S2, S3) in einer Auswerteschaltung (6) bei Vorliegen eines vertikalen Signalsprungs eine Schaltspannung erzeugt wird, durch die der Subtrahierstufe (3) anstelle des extrahierten kammgefilterten Farbartsignals (C1) das bandpaßgefilterte Farbartsignal (C) zugeführt wird.

**EP 0 368 013 B1**

**2.** Schaltung nach Anspruch 1, **dadurch gekennzeichnet,** daß bei einem PAL-Signal das kammgefilterte Farbartsignal (C1) der Subtrahierstufe (3) zugeführt wird, wenn nach der 2H-Verzögerung (S3) ein Farbartsignal oder ein hochfrequentes Y-Signal in der Auswerteschaltung (6) erkannt wird.

**3.** Schaltung nach Anspruch 1, **dadurch gekennzeichnet,** daß bei Farbübergängen aufeinanderfolgender Zeilen in vertikaler Richtung das nicht kammgefilterte Farbartsignal (C) der Subtrahierstufe (3) zugeführt wird.

**4.** Schaltung nach Anspruch 1, **dadurch gekennzeichnet,** daß bei Signalsprüngen auf hochfrequente Y-Signale innerhalb aufeinanderfolgender Zeilen bei einem FBAS-PAL-Signal, kein Signal subtrahiert wird.

**5.** Schaltung nach Anspruch 1, **dadurch gekennzeichnet,** daß bei einem NTSC-Signal das kammgefilterte Farbartsignal (C1) der Subtrahierstufe (3) zugeführt wird, wenn aus den Signalen (S2,S3) vor und nach der zweiten Verzögerungsleitung (2) ein hochfrequentes Farbartsignal oder ein hochfrequentes Y-Signal in der Auswerteschaltung (6) erkannt wird.

**Claims**

**1.** Circuit for an adaptive comb filter for the separation of the brightness signal (Y) and chrominance signal (C) of an FBAS-PAL or NTSC signal including a series circuit of a first and second line delaying line (1, 2) and a subtracting stage (3) delivering the brightness signal (Y) to whose inputs the FBAS signal and the extracted chrominance signal are applied, characterised in that, from a phase comparison in an evaluation circuit (6), of the signals (S1, S2, S3) present on the delay lines (1, 2) in the presence of a vertical jump signal, a switching voltage is generated by means of which the band pass filtered chrominance signal (C) is supplied to the subtracting stage (3) in place of the extracted comb filtered chrominance signal (C1).

**2.** Circuit in accordance with claim 1, characterised in that, for a PAL signal, the comb filtered chrominance signal (C1) is supplied to the subtracting stage (3) if a chrominance signal or a high frequency Y signal is detected in the evaluation circuit (6) after the 2H delay (S3).

**3.** Circuit in accordance with claim 1, characterised in that, for colour transitions of successive lines in the vertical direction, the non comb filtered chrominance signal (C) is supplied to the subtracting stage (3).

**4.** Circuit in accordance with claim 1, characterised in that, for signal jumps to high frequency Y signals within successive lines of an FBAS-PAL signal, no signal is subtracted.

**5.** Circuit in accordance with claim 1, characterised in that, for an NTSC signal, the comb filtered chrominance signal (C1) is supplied to the subtracting stage (3) if a high frequency chrominance signal or a high frequency Y signal is detected from the signals (S2, S3) before and after the second delay line (2) in the evaluation circuit (6).

**Revendications**

**1.** Circuit pour un filtre adaptatif de crête pour séparer le signal de luminance (Y) et le signal de chrominance (C) d'un signal composé de chrominance PAL ou NTSC avec un montage en série d'une première et d'une seconde ligne de retard de ligne (1, 2) et un étage soustracteur (3) qui donne le signal de luminance (Y) aux entrées duquel le signal composé de chrominance et le signal de chrominance extrait sont appliqués, **caractérisé en ce** qu'une tension de commutation est produite à partir d'une comparaison de phase des signaux (S1, S2, S3) existants sur les lignes de retard (1, 2) dans un circuit d'exploitation (6) lorsqu'il y a un saut vertical de signal, tension par laquelle le signal de chrominance filtré par passe-bande (C) est amené à l'étage soustracteur (3) à la place du signal de chrominance extrait à crête filtrée (C1).

**2.** Circuit selon la revendication 1, **caractérisé en ce** que, pour un signal PAL, le signal de chrominance à crête filtrée (C1) est amené à l'étage soustracteur (3) lorsqu'un signal de chrominance ou un signal Y à haute fréquence est reconnu dans le circuit d'exploitation (6) après le retard de 2H (S3).

6

3. Circuit selon la revendication 1, **caractérisé en ce** que le signal de chrominance dont la crête n'est pas filtrée (C) est amené à l'étage soustracteur (3) lors de transitions de couleur de lignes successives dans le sens vertical.

4. Circuit selon la revendication 1, **caractérisé en ce** qu'il n'est pas soustrait de signal pour des sauts de signal sur des signaux Y à haute fréquence à l'intérieur de lignes successives d'un signal composé de chrominance PAL.

5. Circuit selon la revendication 1, **caractérisé en ce** que, pour un signal NTSC, le signal de chrominance à crête filtrée (C1) est amené à l'étage soustracteur (3) lorsqu'un signal de chrominance à haute fréquence ou un signal Y à haute fréquence est reconnu dans le circuit d'exploitation (6) à partir des signaux (S2, S3) devant et derrière la seconde ligne de retard (2).

FIG.1A

EP 0 368 013 B1

# FIG.1B

FBAS
(NTSC)

BPF

1H  1

BPF

1H  2

+ 18
−

C

C1

K5

+ 3
−

Y

C

S1

S2

S3

5

6

EP 0 368 013 B1

FIG.2

EP 0 368 013 B1

FIG.3